# EUROPÄISCHE PATENTSCHRIFT

(11) **EP 1 786 087 B1**
(45) Veröffentlichungstag und Bekanntmachung des Hinweises auf die Patenterteilung: **17.09.2008**
(21) Anmeldenummer: 05024741.0
(22) Anmeldetag: 11.11.2005
(51) Int. Cl.: H02K 15/00, H02K 1/04, H01F 41/02, G01N 25/18, G01N 25/00

(54) **Verfahren zur Behebung eines elektrischen Isolationsfehlers in einem Blechpaket einer elektrischen Maschine**
Method of repairing electrical isolation defects in laminated core of an electrical Machine
Procédé de réparation des défauts d'isolation dans un paquet de tôles d'une machine électrique

(43) Veröffentlichungstag der Anmeldung: 16.05.2007
(73) Patentinhaber: SIEMENS AKTIENGESELLSCHAFT, 80333 München (DE)
(72) Erfinder: Lehmann, Christoph, Dr., 47506 Neukirchen-Vluyn (DE)

(56) Entgegenhaltungen:
- EP-A- 0 913 912
- WO-A-99/29026
- US-A1- 2003 019 096
- PATENT ABSTRACTS OF JAPAN Bd. 1997, Nr. 04, 30. April 1997 (1997-04-30) & JP 08 334445 A (MITSUBISHI HEAVY IND LTD), 17. Dezember 1996 (1996-12-17)

## Beschreibung

Die vorliegende Erfindung betrifft ein Verfahren zur Behebung eines elektrischen Isolationsfehlers in einem aus Blechen gebildeten Blechpaket einer elektrischen Maschine.

In elektrischen Maschinen wird üblicherweise eine elektrische Energie in eine mechanische Energie umgeformt bzw. umgekehrt. Dazu werden Magnetfelder verwendet, von denen wenigstens eins zeitlich veränderlich ist. Um den Wirkungsgrad zu optimieren, werden die Magnetfelder in den aktiven Bereich konzentriert. Damit die Magnetfelder auf den aktiven Bereich konzentriert werden können, sind üblicherweise magnetisch leitfähige Joche vorgesehen. Solche elektrischen Maschinen sind hinlänglich als rotierende elektrische Maschinen wie elektrische Motoren, elektrische Generatoren und dergleichen bekannt. Da in elektrischen Maschinen zeitlich veränderliche Magnetfelder auftreten, werden in den magnetischen Jochen, die als magnetische Rückschlüsse wirken, und die in der Regel auch teilweise elektrisch leitfähig sind, Wirbelströme induziert, die dazu führen, dass ein Teil der magnetischen Energie im magnetischen Rückschluss in unerwünschte Wärme umgewandelt wird. Dies reduziert nicht nur den Wirkungsgrad der elektrischen Maschine, sondern es führt auch zu einer ungünstigen zusätzlichen Erwärmung der elektrischen Maschine, so dass ein erhöhter Kühlungsaufwand erforderlich ist.

Um dieses Problem zu beheben, sind die magnetischen Rückschlüsse in der Regel aus geschichteten Blechen aufgebaut, die jeweils einzeln gegeneinander elektrisch isoliert ausgebildet sind. Die Bleche sind dabei so dünn ausgebildet, dass der Einfluss der Wirbelstromverluste wesentlich reduziert ist. Die Schichtungsebenen sind dazu in der Regel parallel zur Richtung des magnetischen Flusses ausgebildet. Auf diese Weise kann sich ein Wirbelstrom nur innerhalb der Dicke eines Bleches ausbilden, wodurch die Wirbelstromstärke erheblich reduziert ist. Die Isolation zwischen den einzelnen Blechen verhindert, dass sich die Wirbelströme zu großen, verlustreichen Wirbelströmen überlagern können.

Derartige magnetische Rückschlüsse werden üblicherweise als Blechpaket bezeichnet. Bekanntermaßen weisen die verwendeten Isolationen eine gewisse Lebenserwartung auf, die unter anderem von den Beanspruchungsparametern während des bestimmungsgemäßen Betriebs abhängt. Auch im Falle einer Überlastung einer elektrischen Maschine besteht die Möglichkeit, dass durch Überhitzung eine Isolation beschädigt werden kann. Dies führt dazu, dass sich zwischen den vorher isoliert zueinander angeordneten einzelnen Blechen ein vergrößerter elektrischer Wirbelstrom ausbilden kann, der zu einer erhöhten Erwärmung und damit zu einer weiteren Zerstörung der Isolation führt.

Ein solcher Isolationsfehler wird im Stand der Technik dadurch ermittelt, dass das Blechpaket einer Magnetisierungsbeanspruchung unterzogen wird und mittels Temperaturerfassung, die beispielsweise in einer Infrarotauswertung bestehen kann, die Heißstelle im Blechpaket ermittelt wird. Im Bereich der Heißstelle ist dann der Isolationsfehler angeordnet. Befindet sich der Isolationsfehler im Bereich der Oberfläche des Blechpakets, so besteht die Möglichkeit, den Isolationsfehler durch Behandlung mit Harz von außen im Bereich der vermuteten defekten Bleche zu beheben.

Schwieriger ist die Situation, wenn sich der Fehler innerhalb des Blechpakets zwischen den Blechen befindet. Diese Stellen sind üblicherweise von außen nicht zugänglich. Darüber hinaus erlaubt die vorgenannte Erfassung des Isolationsfehlers mittels Temperaturmessung nur eine ungefähre Lokalisierung der schadhaften Stelle. In einem solchen Fall ist es deshalb erforderlich, die elektrische Maschine inklusive des Blechpakets im Bereich der gemessenen erhöhten Temperatur vollständig zu zerlegen.

Das vorgenannte Verfahren erweist sich als außerordentlich kostspielig im Bereich der Mittel- und Großmaschinen, wie sie beispielsweise in Kraftwerken und Industrieanlagen eingesetzt werden. Dabei schlagen nicht nur die außerordentlich hohen Reparaturkosten zu Buche, sondern es erweist sich als weiterer erheblicher Nachteil, dass die Maschine durch die vollständige Zerlegung für einen längeren Zeitraum nicht zur Verfügung steht.

Das Dokument US 2003/019096 A1 offenbart eine rotierende elektrische Maschine mit einem Stator und einem drehbar gelagerten Läufer, wobei der Läufer ein Blechpaket aufweist.

In der EP 0 913 912 A1 wird ein Verfahren zur Reparatur von Warmstellen in aus geschichteten und gegeneinander isolierten Einzelblechen gebildeten Blechpaketen einer elektrischen Maschine offenbart.

Es ist daher die Aufgabe der vorliegenden Erfindung, ein Verfahren anzugeben, mit dem die vorgenannten Nachteile des Stands der Technik reduziert werden können.

Als Lösung der vorgenannten Aufgabe wird mit der Erfindung ein Verfahren zur Behebung eines elektrischen Isolationsfehlers in einem aus Blechen gebildeten Blechpaket einer elektrischen Maschine vorgeschlagen, wobei das Blechpaket mittels eines Magnetfeldes magnetisch beansprucht und mittels Temperaturerfassung ein Blech mit der höchsten Erwärmung ermittelt wird, an dem Blech mit der höchsten Erwärmung an den zugänglichen Stellen Temperatursensoren angeordnet werden, das Blechpaket einer weiteren magnetischen Beanspruchung unterzogen wird, die Messwerte der Temperatursensoren erfasst werden, aus den erfassten Messwerten ein den Isolationsfehler anzeigender Bereich maximaler Temperatur im Blech ermittelt wird, der Isolationsfehler durch Spreizen des Blechpakets freigelegt und behoben wird.

Erstmals ist es somit möglich, auch bei Isolationsfehlern innerhalb des Blechpakets eine vollständige Zerlegung der elektrischen Maschine inklusive des Blechpakets zu vermeiden und somit nicht nur den Aufwand für die Reparatur, sondern auch die Standzeit deutlich zu reduzieren. Das Blechpaket ist aus geschichteten einzelnen Blechen gebildet, die isoliert zueinander zum Blechpaket zusammengefügt sind. Als Isolation können separate Isolationsschichten wie beispielsweise Lacke, Folien, Textilien und dergleichen oder auch spezielle Oberflächenbehandlungen wie durch Oxidierung gebildete Oxidschichten und dergleichen verwendet werden. Das Blechpaket kann mittels geeigneter Spanneinrichtungen in seiner Anordnung fixiert sein.

Die Temperaturerfassung kann mittels geeigneter Sensoren erfolgen, so beispielsweise mit durch Infrarotmessung oder durch Kontaktmessung mittels geeigneter Sensoren wie Halbleitertemperatursensoren, Thermoelemente und dergleichen.

Die magnetische Beanspruchung kann beispielsweise durch Betrieb der elektrischen Maschine oder auch durch Beaufschlagung des Blechpakets mit einem geeigneten Magnetfeld von außen erfolgen. So können beispielsweise strombeaufschlagte vorhandene Maschinenwicklungen hierzu verwendet werden. Daneben kann auch vorgesehen sein, dass nur der interessierende Bereich des Blechpakets mit einem geeigneten Magnetfeld beaufschlagt wird.

Die Messwerte der Temperatursensoren werden erfasst, wobei mittels Berechnungsverfahren ein Bereich maximaler Temperatur im Blech ermittelt wird. Dieser kennzeichnet die Lage des Isolationsfehlers. Ist die Lage des Isolationsfehlers ermittelt, so kann durch Spreizen des Blechpakets im Bereich des Isolationsfehlers dieser freigelegt werden. So kann beispielsweise vorgesehen sein, dass die Bleche, zwischen denen sich der Isolationsfehler befindet, mittels bekannter Werkzeuge gespreizt werden, damit der Isolationsfehler von außen behandelt werden kann. Der auf diese Weise freigelegte Isolationsfehler kann nun entsprechend überarbeitet und damit behoben werden. Ist die Bearbeitung des schadhaften Bereichs abgeschlossen, wird die Spreizung wieder rückgängig gemacht und das Blechpaket steht für seine bestimmungsgemäße Verwendung wieder zur Verfügung. Das erfindungsgemäße Verfahren erlaubt es somit, schadhafte Bereiche der Isolation zwischen einzelnen Blechen des Blechpakets zu beseitigen, ohne dass dazu das Blechpaket komplett zerlegt werden müsste.

In einer Weiterbildung wird vorgeschlagen, dass der Bereich maximaler Temperatur mittels des Finite-Differenzen-Verfahrens ermittelt wird. Dazu wird mittels eines Rechners ein diskretes Modell des schadhaften Blechs mit seinen Wärmeleitfähigkeiten und Wärmequellen nachgebildet. Dazu werden in Schichtrichtung des Blechpakets die Anzahl der Berechnungsebenen beispielsweise gleich oder größer der Anzahl der Bleche in Schichtrichtung gewählt. Die Blechabmessungen werden ebenfalls in eine sinnvolle Anzahl von Ebenen eingeteilt. Das auf diese Weise gebildete Wärmequellennetz weist eine entsprechende Anzahl an Knoten auf, die über thermische Leitfähigkeiten miteinander gekoppelt sind. An den Oberflächen des Blechs sind die Temperaturen durch Messung bekannt oder können geeignet angenommen werden. An den Blechoberflächen können deshalb die dort liegenden Knoten interpoliert werden. Beispielsweise kann im Folgenden mit Hilfe des aus der Elektrotechnik bekannten Knotenpotentialverfahrens nun aus den bekannten Temperaturen und abgeführten Verlusten an der Oberfläche des Blechs die Temperaturen und Verluste an den Knoten innerhalb des Blechs berechnet werden. Aus der Lage des Knotens mit der maximalen Temperatur kann nun die Lage des Kurzschlusses im Blech ermittelt werden. Auf diese Weise kann die Bestimmung der schadhaften Stelle in der Isolierung deutlich vereinfacht und verbessert werden.

In einer weiteren Ausgestaltung wird vorgeschlagen, dass das freigelegte Blech im Bereich des Isolationsfehlers bearbeitet wird. So können beispielsweise durch die Stromwirkung entstandene Oberflächenrauigkeiten dahingehend bearbeitet werden, dass sie eine neu einzubringende Isolierung nicht mehr beschädigen können. Die Qualität der Reparatur kann erhöht werden.

Darüber hinaus wird vorgeschlagen, dass das Blech spanabhebend bearbeitet wird. Insbesondere vorstehende Materialablagerungen im Bereich des Isolationsfehlers können entfernt werden, so dass diese nicht zu einer Beschädigung der neu einzubringenden Isolation führen können.

Weiterhin wird vorgeschlagen, dass der Isolationsfehler durch Einfügen von Zwischenlagen aus Isolierstoff und/oder von Harz behoben wird. So kann erreicht werden, dass das Isoliermaterial zwischen den Blechen nicht vollständig ausgewechselt werden muss, sondern dass lediglich im Bereich der schadhaften Stelle das Isoliermaterial ausgebessert wird. Dies vereinfacht weiter den Montageaufwand. Der Isolierstoff kann beispielsweise durch geeignete Folien oder Platten aus einem Isolierstoff wie beispielsweise Kunststoff, Textil oder Lack gebildet sein, es kann aber auch vorgesehen sein, dass die schadhafte Stelle lediglich mit einem Harz zur Ausbesserung befüllt wird, welches geeignete Isoliereigenschaften aufweist.

Mit Vorteil wird ferner vorgeschlagen, dass als elektrische Maschine eine rotierende elektrische Maschine, insbesondere ein elektrischer Generator verwendet wird. Das erfindungsgemäße Verfahren erweist sich gerade im Bereich der rotierenden Maschinen, insbesondere der Mittel- und Großmaschinen als vorteilhaft, da ein Isolationsfehler bei einer derartigen Maschine mit einem enormen Kostenaufwand behoben werden muss. Hier kann der Aufwand erheblich reduziert werden.

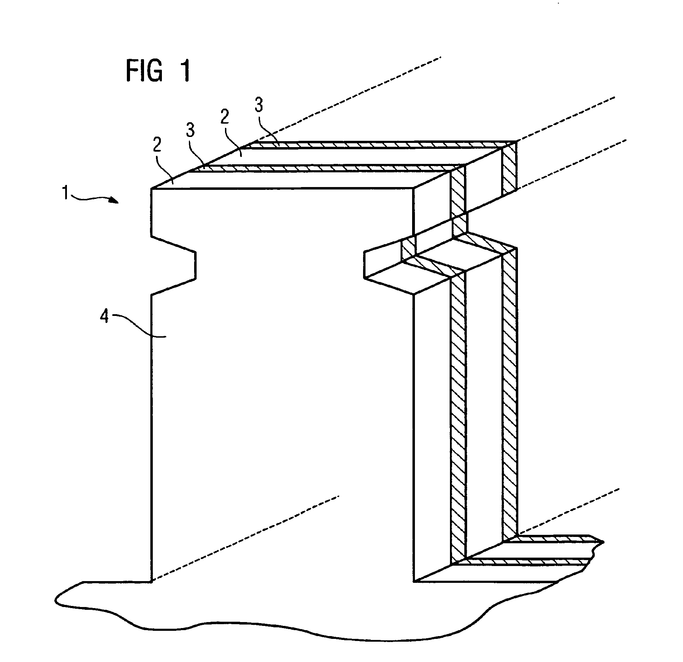

Weitere Vorteile und Merkmale sind der folgenden Beschreibung eines Ausführungsbeispiels zu entnehmen. Im wesentlichen gleichbleibende Bauteile sind mit den gleichen Bezugszeichen bezeichnet. Ferner wird bezüglich gleicher Merkmale und Funktionen auf die Beschreibung zum Ausführungsbeispiel in Fig. 1 verwiesen. Die Zeichnungen sind Schemazeichnungen und dienen lediglich der Erläuterung des folgenden Ausführungsbeispiels.

Es zeigen:
- Fig. 1: eine schematisch perspektivische Schnittansicht durch einen Ausschnitt eines Blechpakets eines Synchrongenerators in einem Kraftwerk und
- Fig. 2: schematisch ein Wärmequellennetzwerk des Ausschnitts des Blechpakets gemäß Fig. 1 zur Verwendung mit dem Finite-Differenzen-Verfahren.

Fig. 1 zeigt schematisch einen Ausschnitt eines Ständerblechpaktets 1 eines nicht weiter dargestellten Synchrongenerators, wie er in einem Kraftwerk zur Energieerzeugung eingesetzt wird. Das Blechpaket weist lamellierte Eisenbleche 2 auf, die durch eine Isolation 3 voneinander elektrisch isoliert sind. Jedes einzelne Eisenblech 2 ist im wesentlichen kreisförmig ausgebildet und weist innenseitig eine Öffnung auf, in der nach innen ragend Zähne 4 auf dem Umfang beabstandet angeordnet sind. Zwischen den Zähnen sind parallel zu deren Längserstreckung die Generatorwicklung bildende Kupferstäbe angeordnet, die in der Figur zwecks Übersichtlichkeit nicht dargestellt sind. In gleicher Weise sind die Isolierungen 3 aufgebaut. Die Dicke der Eisenbleche 2 ist so gewählt, dass magnetische Flussänderungen nur sehr geringe Wirbelströme in den Eisenblechen 2 erzeugen können. Durch die elektrische Isolation 3 wird verhindert, dass sich die Wirbelströme in den einzelnen Eisenblechen 2 zu Wirbelströmen signifikanter Stärke überlagern können.

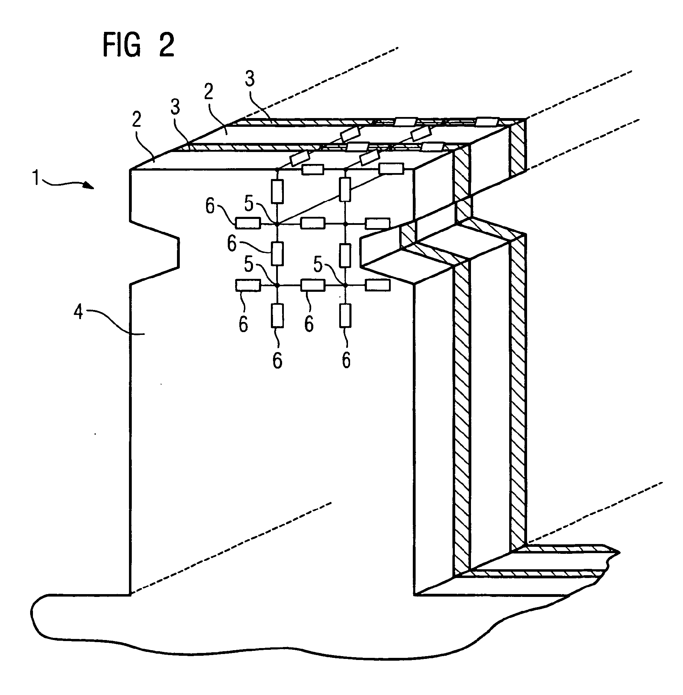

Fig. 2 zeigt ein thermisches Ersatzschaltbild für das in Fig. 1 dargestellte Blechpaket 1 zur Anwendung des Finite-Differenzen-Verfahrens. Wie aus Fig. 2 ersichtlich ist, ist das Blechpaket 1 mittels eines Netzes aus Wärmequellen 5 und thermischen Leitfähigkeiten 6 diskretisiert zur rechnergestützten Verarbeitung dargestellt.

Die einzelnen Bleche 2 weisen eine Dicke von etwa 1,5 mm auf. Die dazwischen liegenden Isolationen 3 weisen eine Dicke von etwa 0,3 mm auf und sind aus faserverstärktem Epoxydharz gebildet.

Das Verfahren zur Behebung eines elektrischen Isolationsfehlers läuft wie folgt ab. Während des Betriebs der elektrischen Maschine zeigt sich eine Anormalität, die darauf zurückzuführen ist, dass sich im Blechpaket 1 ein Isolationsfehler gebildet hat. Dazu wird das Blechpaket 1 bestimmungsgemäß magnetisiert und mittels Infrarottemperaturmessung der Bereich des wärmsten Zahns 4 des Blechpakets 1 ermittelt. Dieser Bereich wird einer genaueren Temperaturmessung an seiner Oberfläche unterzogen.

Dazu werden die Zahnoberfläche und die Zahnseitenflächen mit Thermoelementen bestückt, soweit diese zugänglich sind. Das Blechpaket 1 wird dann einer erneuten Magnetisierung ausgesetzt und die Temperaturverteilungen an den Oberflächen werden mittels der Thermosensoren aufgenommen. Aus den Oberflächentemperaturen wird mit Hilfe eines im Folgenden beschriebenen Wärmequellennetzprogramms, welches auf einem Rechner ablauffähig ist, die Temperaturverteilung innerhalb des Blechpakets 1 ermittelt.

Wie in Fig. 2 dargestellt, werden die in Frage kommenden Ständerzähne 4 im Sinne des Finite-Differenzen-Verfahrens diskretisiert unter Zuhilfenahme von thermischen Leitfähigkeiten und Wärmequellen. Auf diese Weise wird ein so genanntes Wärmequellennetz nachgebildet. So ist in dieser Ausgestaltung die Anzahl der Berechnungsebenen gleich der Schichtung des Blechpakets 1 gewählt. Sie kann aber auch eine größere Anzahl an Berechnungsebenen enthalten, so dass jedes Blech 2 mehrere Berechnungsebenen umfasst. Die Zahnhöhe und die Zahnbreite ist ebenfalls in eine sinnvolle Anzahl von Berechnungsebenen eingeteilt, die beispielsweise größer als 10 gewählt wird. Auf diese Weise wird ein Wärmequellennetz mit einer vorgegebenen Anzahl von N Knoten gebildet.

Die Knoten an den Oberflächen bekommen die Temperaturen zugewiesen, die messtechnisch erfasst wurden. An weiteren Randstellen können Temperaturen mit hinreichender Genauigkeit angenommen werden, so beispielsweise an der Grenze zum Joch. Mit Hilfe des Finite-Differenzen-Verfahrens können nun die Temperaturen an den inneren Knoten 5 ermittelt werden, und zwar mit Hilfe des aus der Elektrotechnik bekannten Knotenpotentialverfahrens. Dabei wird von den bekannten Temperaturen und den abgeführten Verlusten an der Oberfläche die Temperaturen und die Verluste an den Knoten 5 innerhalb des Zahns 4 berechnet. Der Knotenpunkt 5 mit der maximalen Temperatur liefert nun die Lage des elektrischen Isolationsfehlers.

Durch eine gezielte Öffnung des Blechpakets 1 durch Spreizen der Bleche 2 in dem Bereich, in dem der Isolationsfehler angenommen wird, wird nun die Fehlerquelle zwischen den Blechen 2 geöffnet. Es erfolgt eine Oberflächenbearbeitung der Bleche 2, so dass keine scharfkantigen Stellen aus dem Blech 2 herausragen, die möglicherweise die Isolation 3 erneut beschädigen könnten. Die beschädigte Isolation 3 wird mit einem Harz ausgebessert. Zu guter Letzt wird eine Schutzfolie über der Harzschicht angeordnet. Danach wird die Spreizung wieder aufgehoben und der Isolationsfehler ist beseitigt.

Das vorgenannte Ausführungsbeispiel ist für die Erfindung nicht beschränkend. So können einzelne Verfahrensschritte mit fachmännischem Wissen variabel verwirklicht werden, ohne dass der in den Ansprüchen definierte Schutzbereich der vorliegenden Erfindung verlassen wird.

## Patentansprüche

1. Verfahren zur Behebung eines elektrischen Isolationsfehlers in einem aus Blechen gebildeten Blechpaket einer elektrischen Maschine,
wobei das Blechpaket (1) mittels eines Magnetfelds magnetisch beansprucht und mittels Temperaturerfassung ein Blech (2) mit der höchsten Erwärmung ermittelt wird,
an dem Blech (2) mit der höchsten Erwärmung an den zugänglichen Stellen Temperatursensoren angeordnet werden, das Blechpaket (1) einer weiteren magnetischen Beanspruchung unterzogen wird,
die Messwerte der Temperatursensoren erfasst werden,
aus den erfassten Messwerten ein den Isolationsfehler anzeigender Bereich maximaler Temperatur im Blech (2) ermittelt wird,
der Isolationsfehler durch Spreizen des Blechpakets (1) freigelegt und behoben wird.

2. Verfahren nach Anspruch 1,
**dadurch gekennzeichnet, dass**
der Bereich maximaler Temperatur mittels des Finite-Differenzen-Verfahrens ermittelt wird.

3. Verfahren nach Anspruch 1 oder 2,
**dadurch gekennzeichnet, dass**
das freigelegte Blech (2) im Bereich des Isolationsfehlers bearbeitet wird.

4. Verfahren nach Anspruch 2,
**dadurch gekennzeichnet, dass**
das Blech spanabhebend bearbeitet wird.

5. Verfahren nach einem der Ansprüche 1 bis 4,
**dadurch gekennzeichnet, dass**
der Isolationsfehler durch Einfügen von Zwischenlagen aus Isolierstoff und/oder von Harz behoben wird.

6. Verfahren nach einem der Ansprüche 1 bis 5,
**dadurch gekennzeichnet, dass**
als elektrische Maschine eine rotierende elektrische Maschine,
insbesondere ein elektrischer Generator verwendet wird.

## Claims

1. Method for eliminating an electrical insulation fault in a laminate stack comprising laminates of an electrical machine, the laminate stack (1) being magnetically loaded by means of a magnetic field, and a laminate (2) with the highest level of heating being determined by means of temperature detection, temperature sensors being arranged on the laminate (2) with the highest level of heating at the accessible points, the laminate stack (1) being subjected to further magnetic loading, the measured values of the temperature sensors being detected, a region of maximum temperature in the laminate (2) which indicates the insulation fault being determined from the detected measured values, and the insulation fault being exposed, by the laminate stack (1) being spread out, and being eliminated.

2. Method according to Claim 1, **characterized in that** the region of maximum temperature is determined by means of the finite difference method.

3. Method according to Claim 1 or 2, **characterized in that** the exposed laminate (2) is machined in the region of the insulation fault.

4. Method according to Claim 2, **characterized in that** the laminate is machined.

5. Method according to one of Claims 1 to 4, **characterized in that** the insulation fault is eliminated by virtue of the insertion of interposed layers consisting of insulating material and/or of resin.

6. Method according to one of Claims 1 to 5, **characterized in that** a rotating electrical machine, in particular an electrical generator, is used as the electrical machine.

## Revendications

1. Procédé de suppression d'un défaut d'isolation électrique dans un paquet de tôles d'une machine électrique,
dans lequel on sollicite magnétiquement le paquet ( 1 ) de tôles au moyen d'un champ magnétique et on détecte au moyen d'un relevé de température une tôle ( 2 ) ayant l'échauffement le plus grand,
on met sur la tôle ( 2 ) ayant l'échauffement le plus grand des sondes de température aux points accessibles,
on soumet le paquet ( 1 ) de tôles à une sollicitation magnétique supplémentaire,
on relève les valeurs de mesure des capteurs de température,
on détermine à partir des valeurs de mesure relevées une partie de température maximum dans la tôle ( 2 ) indiquant le défaut d'isolation,
on met à nu le défaut d'isolation en écartant le paquet ( 1 ) de tôles et on le supprime.

2. Procédé suivant la revendication 1,
**caractérisé en ce que**
l'on détermine la partie de température maximum au moyen d'un procédé aux différences finies.

3. Procédé suivant la revendication 1 ou 2,
**caractérisé en ce que**
l'on usine la tôle ( 2 ) mise à nu dans la partie du défaut d'isolation.

4. Procédé suivant la revendication 2,
**caractérisé en ce que**
l'on usine la tôle avec enlèvement de copeaux.

5. Procédé suivant l'une des revendications 1 à 4,
**caractérisé en ce que**
l'on supprime le défaut d'isolation en insérant des couches intermédiaires en matière isolante et/ou de résine.

6. Procédé suivant l'une des revendications 1 à 5,
**caractérisé en ce que**
l'on utilise comme machine électrique une machine électrique tournante, notamment une génératrice électrique.
